# EUROPEAN PATENT SPECIFICATION

(11) **EP 1 567 924 B1**
(45) Date of publication and mention of the grant of the patent: **18.07.2012**
(21) Application number: 03812467.3
(22) Date of filing: 02.12.2003
(51) Int. Cl.: B29C 45/17, G06M 1/02

(54) **CYLINDRICAL TOOL CYCLE COUNTER**
ZYLINDRISCHER GERÄTEZYKLENZÄHLER
COMPTEUR CYLINDRIQUE DE CYCLES D'OUTIL

(30) Priority: 02.12.2002 US 430543 P
(43) Date of publication of application: 31.08.2005
(73) Proprietor: Starkey, Glenn E., North Barrington, IL 60010 (US)
(72) Inventor: Starkey, Glenn E., North Barrington, IL 60010 (US)
(74) Representative: Wagner, Matthias
(86) International application number: PCT/US2003/038069
(87) International publication number: WO 2004/051857

(56) References cited:
- EP-A- 0 726 129
- US-A- 5 117 173
- US-A- 5 571 539
- US-A- 5 755 901
- US-B1- 6 377 649

## Description

### Field of the Invention

The present invention is directed to an improved on-board tool cycle counter for use in a tool for producing parts in a production press in accordance with claim 1.

### Background

Production tools such as injection molds, blow molds, casting die or stamping dies, are frequently swapped in and out of a given press or between different presses to accommodate production schedules. As a result, it has been desirable for a tool to have a reliable tool cycle counter associated with it One approach to such tool cycle counters is found in U.S. Patent No. 5,571,539 issued to D&L Incorporated and co-owned by the assignee of the present application. Such on board counters, that is, counters designed to travel with a tool are to be distinguished from "tooling press" counters which are integrated within the tooling press and typically count the number of parts tooled during a production cycle or the number of times a tooling press has been cycled prior to maintenance on the tool press, or in some cases, are reset to reflect the number of parts produced on a given shift. In contrast, the on board tool counters stay with the tool which, as set forth above, may be periodically switching into and out of a tool press so that a "tool press" cycle count can significantly diverge from the cycle count for individual tools used with a tool press. As the tool may be used in test runs where it is cycled without engaging a "tool press" counter, there are additional opportunities for the "tool press" counter cycle count and on board counter cycle count to significantly differ. From a tool maintenance perspective, it is desirable to have an accurate cycle count which includes all open to closed cycles for a given tool whether for test runs or any other purpose, whether or not they are recorded by a tool press cycle counter. Although the on board counters or tool counters disclosed in the '539 patent function well for their intended purpose, there is still a need for improvements in the current on board counters.

On problem with such counters is that they require a machined pocket within one of the tool portions to receive the counter. The machining of the pocket typically requires a separate machining set up step which takes considerable time and effort and thus incurs additional expense. The machining of such a pocket and securing of the counter to the tool portion requires more time and effort than is desirable. Thus, it is on object of the invention to provide an improved on board counter that is easier and less expensive to install and secure than prior counters.

Another problem with current on board counters is the relatively large size and bulk of the current counters. This undesirable bulk leads to another problem for a tool designer or end user. The physical space on the tool is at a premium since a considerable number of tool components, water lines, electrical wiring are arranged throughout the tool, particularly near the parting line. The issue of lack of space is particularly acute on the core portion or half of the tool. For this reason, it has been found that more compact tool counters are desired.

Another problem with the current on board counters is that they are designed for installation in a particular orientation within the tool. If they are installed on an opposing tool portion, in order to have the counter actuator properly configured relative to the tool cavity, the tool count indicia is backward with the "single" digits portion of the indicia located to the left of the "tens" digit portion of the indicia. Thus, there is a need for an on board counter that is orientated for installation in the "cavity" portion of the tool.

Document EP-A-0726129 discloses a tool cycle counter in accordance with the preamble of claim 1.

### Summary

In accordance with the present invention, an improved tool cycle counter is provided having the features of claim 1.

The cylindrical housing of the present invention allows for a particularly compact on board tool cycle counter design. The cylindrical shape of the housing also provides for simplified installation within a tool portion since the housing can be installed in a bore drilled into the tool portion with the same machining set up as used when the mold's guide pins and bushings are machined, rather than requiring the separate machining set up of the rectangular pocket used with prior tool counters. The installation of the cylindrical counter of this embodiment of the invention typically saves labor costs for the tool manufacturer relative to installation of the prior counter designs. Preferably, the tool cycle counter of the invention includes an actuator which is movable in response to completion of a tool cycle.

In one preferred embodiment of the invention, an on board tool cycle counter is provided in which the counter actuator, when installed in the cavity portion of the tool, may be oriented toward the tool cavity with the numerical indicia properly oriented with descending digit places, e.g., hundreds, tens, ones, etc., from left to right. In another preferred embodiment of the invention, an on board tool cycle counter is provided in which the counter actuator, when installed in the core portion of the tool, may be oriented toward the tool cavity with the numerical indicia properly orientated with digit places of descending order oriented from left to right. By providing alternate tool cycle counters with oppositely oriented counter actuators and displays, applicant can ensure that the tool cycle counter can always be installed in the correct orientation in a tool portion. In another aspect of the invention, the cylindrical housing of the counter is designed for use in either the core portion version or cavity portion version of the counter. In this way, the cost of manufacturing the counters is reduced since only a single tooling is necessary to tool the counter housing for both versions.

In another preferred embodiment, the counter includes an electronic chip having a memory device for storing information concerning the operation of the tool. The chip may also preferably include a timer and calendar means for tracking time dependent data that may be used for calculating cycle times and other operational parameters. It may further include a processor programmed to process data stored in the memory device or input data and/or calculate useful operational information from such data. Utilizing these programmable features, the counter can track useful operational information, such as, for example, the cycle time for a particular part, dates on which the tool was in production, part name, part number, tool I.D. number, materials used for a particular part, part counts per run, total part counts for multiple runs, total tool cycles during the tool life, identification of tooling supplier, recommended maintenance schedules, the actual maintenance history of the tool, operational history, count down from last maintenance to next scheduled maintenance, bill of materials, recommended replacement tooling components, cycles remaining before next recommended maintenance, calculating the time period until the next recommended maintenance based on current or historical operation parameters, etc. With the date and time information, as well as the specific parts being run, there may be provided a history with respect to the number of specific parts made and the date of their manufacture, as well as their average cycle time or other information so as to provide a better history of the tool operation.

In the preferred embodiment of the counter which includes an electronic chip, the counter includes an input and output through which the information may be added to or retrieved from the memory device or processor. Such communication input and output ports may be connectable to a readout device which preferably is a hand-held, readout device. The input and out ports may be physically connected through a detachable wired connection or connected through use of a wireless communication device to the readout device. Alternatively, the ports could be connected to a computer or computer system which could interrogate the counter for a complete readout of that which has been stored in memory or output from the processor. The readout device may also preferably function as an input device which can input information into the memory or the processor, and may be used to reprogram or upgrade the software running the processor or memory device. The read out device may also be toggled between a variety of counting functions that are simultaneously being tracked, for example, total cycles in the tool life, cycle count down from a predetermined count to zero for either scheduled maintenance or a part count, a count up for the current operation, or sum total count of parts made during multiple runs. Alternately, the simultaneous counts may be displayed on an electronic display built into the counter which may be toggled between the various simultaneously tracked counts.

In another aspect of the invention, an improved method is provided for installing the tool cycle counter into a tool plate having a predetermined height and defining at least a portion of the parting line constituting the boundry between the core half and cavity half of the tool. The method including the steps of: forming a substantially cylindrical bore in the tool plate from the side of the plate opposite the parting line; and mounting the substantially cylindrical tool cycle counter within the substantially cylindrical bore. The method may also preferably include the step of matching the height of the counter to the predetermined height of the tool plate and forming an aperature in the exterior side wall of the tool plate through which the counter display may be viewed.

The present invention further includes a method of installing a substantially cylindrical cycle counter within a tool including the steps of measuring a distance from an exterior surface of a movable tool portion that is less than the predetermined diameter of the substantially cylindrical tool cycle counter; forming a substantially cylindrical bore in the movable tool portion having a diameter greater than the predetermined diameter of the substantially cylindrical tool cycle counter such that an aperture is formed in the exterior surface of the tool portion; placing the substantially cylindrical tool cycle counter within the substantially cylindrical bore in an orientation in which the count indicia may be viewed through the aperture formed in the exterior surface of the tool portion; and securing the substantially cylindrical counter within the substantially cylindrical bore.

### Brief Description of the Drawings

The organization and manner of the structure and function of the invention, together with the further objects and advantages thereof, may be understood by reference to the following description taken in connection with the accompanying drawings, and in which:
FIG. 1 is a partial, perspective view of a tool with the counter of one preferred embodiment of the invention positioned in the core portion of the mold;
FIG. 2 is an enlarged view of the tool of FIG. 1;
FIG. 3 is an enlarged perspective view of the counter of FIG. 1;
FIG. 4 is a top, plan view of the counter of FIG. 1;
FIG. 5 is a front, plan view of the counter of FIG. 1;
FIG. 6 is a side, elevational view of the counter of FIG. 1;
FIG. 7 is side view of the end cap of the counter or FIG. 1;
FIG. 8 is a side, elevational view of the end cap of FIG. 7;
FIG. 9 is a side, elevational view of the stem, end plate, and spring plate of the embodiment of FIG. 1;
FIG. 10 is a partial exploded, perspective view of a the counter mechanism and actuator assembly of the embodiment of FIG. 1;
FIG. 11 is a side elevational view of cam actuator 120 of the embodiment of FIG. 1;
FIG. 12 is a partial, perspective view of a tool with the counter of one preferred embodiment of the invention positioned in the cavity portion;
FIG. 13 is a partially exploded, back plan view of the housing, stem, and end cap of the core portion embodiment of the counter of FIG. 12;
FIG. 14 is a partially exploded side plan view of the housing, stem, end plate, and spring plate of the core portion embodiment of the counter of FIG. 12;
FIG. 15 is a front, plan view of the counter of FIG. 12;
FIG. 16 is a partial cross sectional view of the counter of Fig. 12 taken along lines 16-16 of FIG. 13;
FIG. 17 is a block diagram of the chip set of another alternate embodiment of the counter of the invention;
FIG. 18 is a front plan view of the embodiment of FIG. 17 showing an input output port;
FIG. 19 is an enlarged fragmentary front plan view of the tool and counter of FIG. 1; and
FIG. 20 is an enlarged top plan view at the core half of the tool and the counter installed therein of FIG. 19.

### Detailed Description of the Illustrated Embodiment

As shown in the drawings for purposes of illustration, one embodiment of the present invention includes an tool 10 with an improved cycle counter 38, which includes an upper tool half or cavity tool half 11 and a lower tool half or core tool half 12. It should be understood that the counter of the present invention can be mounted in a range of production tools, such as, blow mold, injection molds, casting dies, thermo- forming molds, or stamping dies, to provide a tooling cycle count which travels with the tool. In this instance, the lower tool half 12 is shown in a lowered, open position and is mounted for vertical, reciprocal movement to an upper, closed position on four vertical guide pins 14 which are stationary or fixedly mounted at their upper ends to the upper tool half 11. The lower tool half 12 has guide pin-receiving bushings 15 which slide along the respective posts 14 as the lower tool half is raised and lowered to complete a typical tooling cycle in a tooling press (not shown). The particular tool has an upper sprue or opening 16 through which the hot, molten plastic may be injected into a cavity in the upper tool half as well as a cavity 19 in the lower tool half which mates with the upper tool cavity to form the part 20. The part 20 is typically ejected by an upward movement of an ejector plate 22, which is mounted for vertical movement on four, vertical, small posts 24. The ejector plate 22 is mounted between the upper, horizontal tool block 26 and a lower, horizontal plate 28. A pair of side plates 30 connect the upper tool block 26 to the lower tool plate 28. Manifestly, the tool portions 11 and 12 may come in various sizes and shapes that differ from those illustrated herein. More specifically, some tools for parts having complex shapes may be formed of three or more moving tool portions which define the tool cavity when held in a closed position, rather than being defined by a pair of tool halves as illustrated. The tool halves 11 and 12 are shown in their conventional orientation when the tools are being constructed by a tool maker or being stored. It is to be understood that, in use when installed in a tool press (not shown), the tool is rotated ninety degrees (90°) so that the tooled part falls from the tool cavity by force of gravity after ejection from the tool cavity.

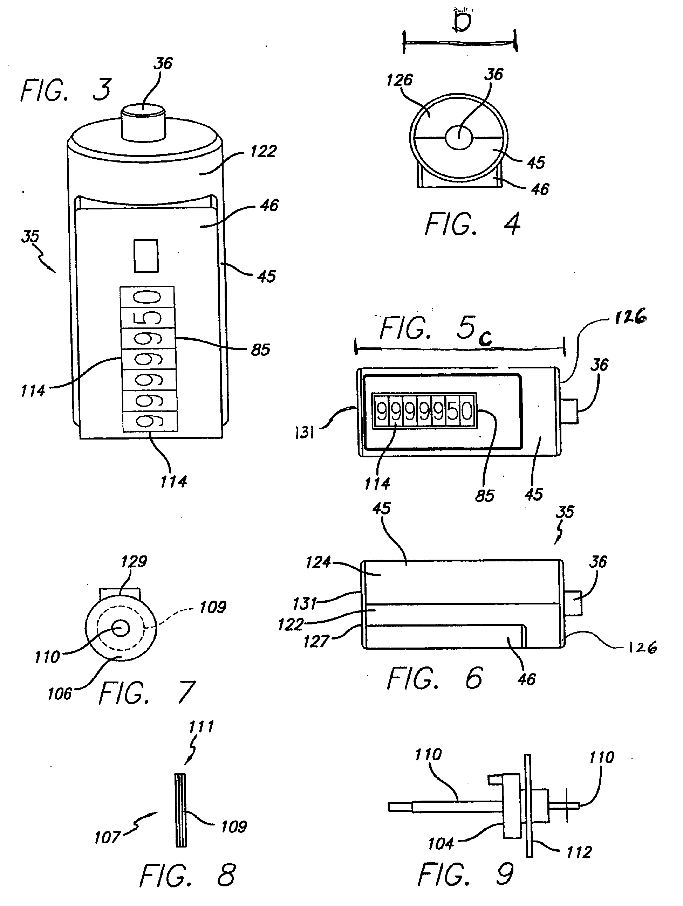

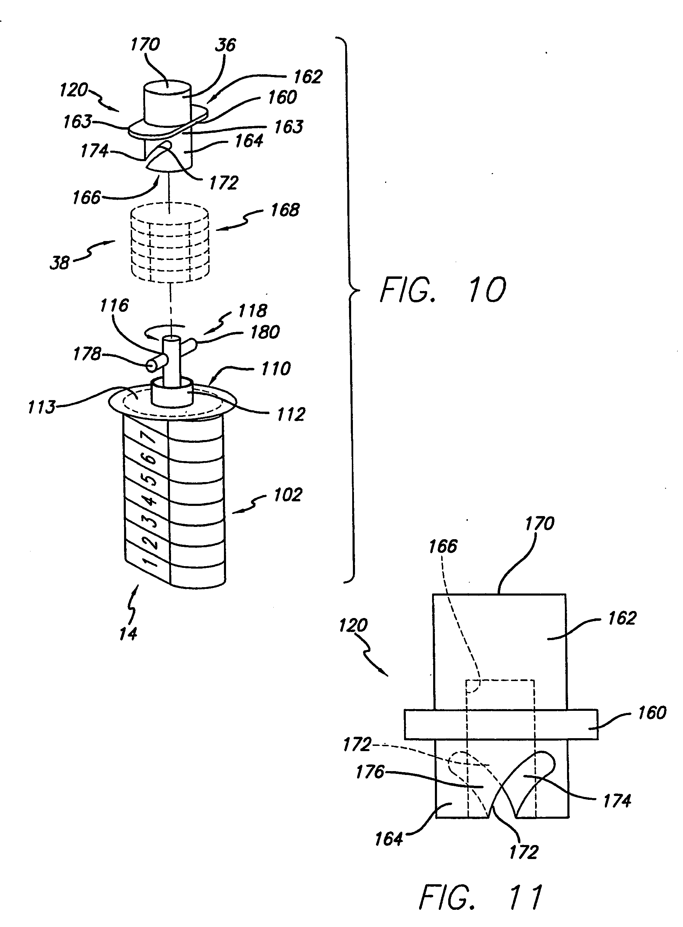

In accordance with one embodiment of the present invention, the tool 10 is provided with its own counter 35, which includes an actuator 36 (FIGS. 3-4) to be actuated with each opening and closing movement of the tool when it is in a tooling press. Associated with the actuator 36 is a cycle counter 38 assembly (FIG. 10), which maintains the cycle count in the counter for a prolonged period of time, whether the tool is in the press or out of the press.

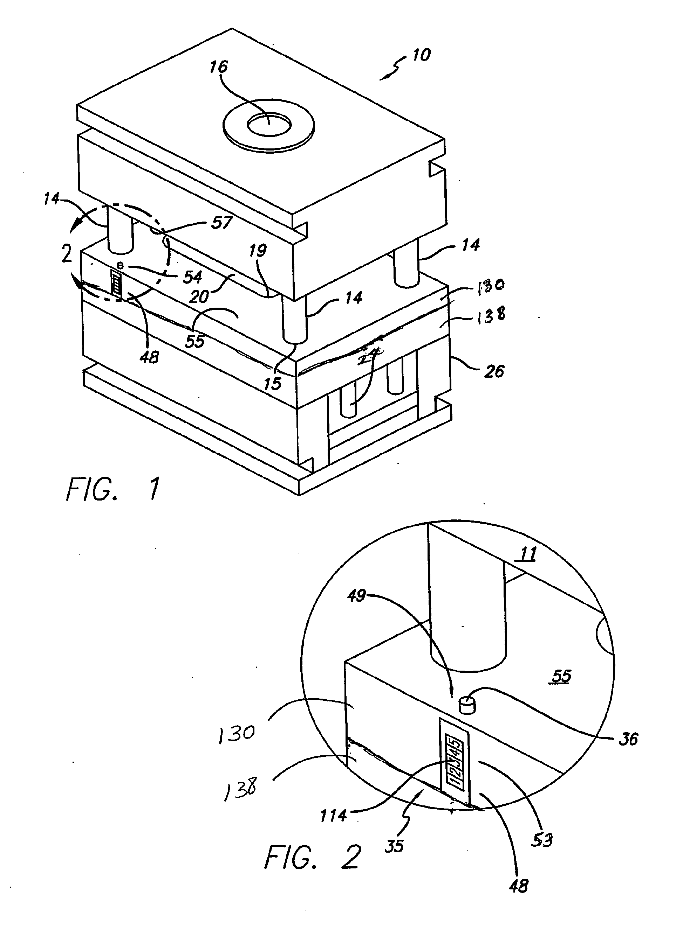

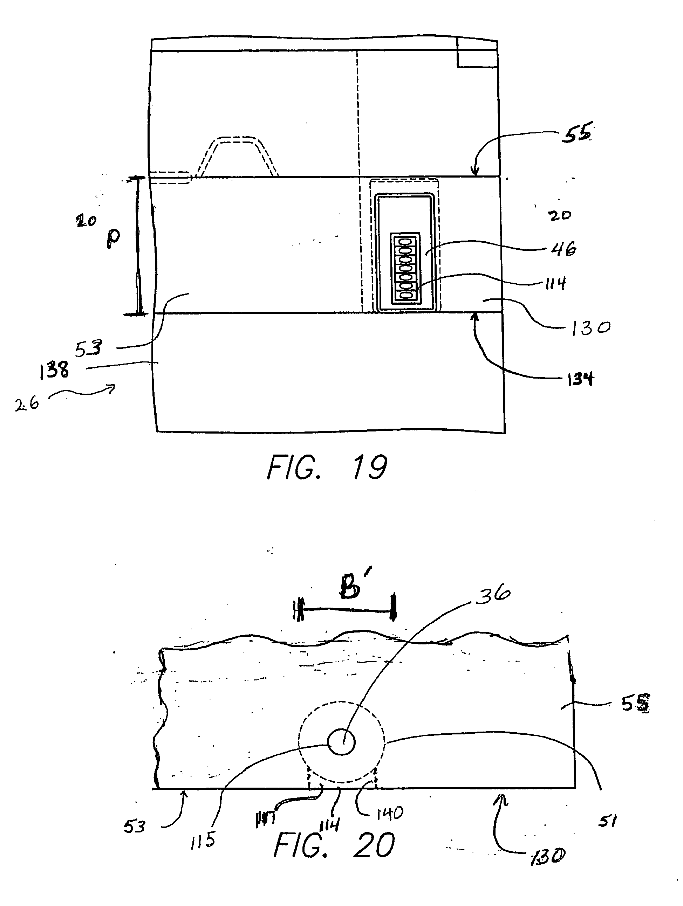

The first illustrated counter 35 has a substantially cylindrical housing 45 with a block-shaped extension 46, which forms a tough, closed body or housing for substantially enclosing and protecting the internal components, which in this embodiment are shown in FIGS. 7-10. The counter 35 may be mounted in various manners--that is, attached to the tool in various ways. When, as is preferred, the monitor is built into the tool, such as shown in FIGS. 1 and 19, a cylindrical bore 48 is machined in the tool block 26 from the side of the mold plate opposite the parting line with the housing 45 being received in the pocket. The diameter of the bore 51 is selected and it is located so that when it is machined in the block 26 a small circular aperture 115 is formed in the top surface 55 to accommodate the actuator 36 at the parting line and a side opening 117 is formed in its exterior side 53. The counter actuator 36 extends through vertical opening or bore 51 in the top surface 55 and the extension 119 and display portion 114 extends into the side opening 117 in the exterior side 53. Preferably, after installation, the upper top wall 54 of the monitor is recessed below the top surface 55 of the tool half 26 through aperature 115 (FIGS. 1 and 19) with only the plunger actuator 36 projecting through aperature 115 above the plane of the top surface 55 of the tool block 26. The preferred method of installing the cylindrical counter of the present invention will be discussed in more detail below.

As the tool block is raised, the plunger actuator is lifted upwardly to abut the underside 57 of the top tool half 11, which is stationary in this instance, although it could be movable. The stationary, lower surface 57 then depresses the plunger actuator 36 to advance the counter assembly 38 for one cycle. Of course, when the tool opens and lowers the top surface 55 of the lower tool half from the undersurface of the top tool half, the plunger 36 is urged by an internal spring to again project above the top wall 54 of the monitor to be ready to be actuated upon the next closing cycle of the tool.

Turning more specifically to the internal portions of the counter 35 and referring to FIGS. 4-11, the counter assembly 38 has a conventional interlocking wheel stroke counter mechanism 102 (FIG. 10) which has been specially adapted for use in tool cycle counting. The counter assembly 38 is hermetically sealed in counter housing 45. The counting mechanism 102 registers a count upon sufficient rotation of plunger or stem 110 associated therewith. The stem 110 extends through end plate 112 which defines a top surface 113 of the counter mechanism 102. Upon sufficient rotation of the stem 110, the stroke counter registers a count with the counting mechanism 102 which can be seen on the display 114.

The counter mechanism 102 has a cross bore 116 drilled in the stem 110 at the end 118 of the stem 110 extending out of the counter housing 45 as shown in FIG. 10. It has been found that it is easiest to drill the bore 116 in the stem 110 with the stem 110 depressed so that it is in contact with the back of the counter housing 45. After drilling the cross bore 116, a pin 118 (FIG. 10) is inserted in the bore 116 for engagement by a cam actuator 120. To provide the requisite rotary motion to the stem 118 for registering a count with the counter mechanism 102 as the tool halves 11 and 12 are moved to their are closed position, the cam actuator 120 is spring loaded on the stem 110. Referring to FIGS. 10-11, the cam actuator 120 includes a transverse spring engaging surface 160 intermediate a top cap portion 162 and a bottom pin engaging portion 164 thereof. A central longitudinal bore 166 extends from the bottom of the pin engaging portion 164 to just above the spring engaging portion 160 in the cap portion 162. The central bore 166 can have a length generally corresponding to the length of the stem 110 in its extended state as it projects from the protective housing 104. The spring engaging portion 164 further includes flattened edges 163 which are adapted to engage a pair of legs (not shown) extending radially inwardly from the back half 124 of the housing 45.

A spring 168 is mounted between the top surface 113 of the end plate 112 of the counter mechanism 102 and the spring engaging portion 160 of the cam actuator 120 to continuously bias the cam actuator 120 to its extended state shown in FIG. 10. The top surface 170 of the cap portion 162 is adapted to be engaged so as to push the stem 110 against the bias of the spring 168 into a depressed position while rotating the spring to register a count with the counter mechanism 102, as illustrated in FIG. 10. To do this, the pin engaging portion 164 of the cam actuator 120 includes cam surfaces 172 for engagement with the pin 118 of the stem 110. The cam surfaces 172 form arcuate paths 174 and 176 spaced 180° from each other around the stem all along their paths with the pin portions 178 and 180 extending from either side of the stem 110 traversing respective arcuate paths as the top cap surface 170 is engaged and the cam actuator 120 is depressed. In this manner, the stem is caused to rotate sufficient to register a count with the counter mechanism 102. Thus, with the counter assembly 106 described herein including the cam actuator 120 and the rotatable stem 110 and pin 118, the linear, straight line movement of the tool halves 11 and 12 towards a closed position is converted to a rotary movement of the stem 110 which registers a count in the counter mechanism 102. The change in the count can be seen on the display 114 through window 85 formed in block extension 46 the cylindrical housing 45.

Turning to FIGS 7-9, the counter mechanism 102 includes end plate 112 slidably mounted on stem 110 which passes through a longitudinally extending aperture formed through the interior of numbered wheels 106 and mounting in the central orifice 107 of end cap 109. Fixedly mounted on the stem 110 is spring loaded plate 104 having springing extension 103 dimensioned to engage notches formed in the interior surface of the first of wheel 106 located adjacent of the end plate 112. Rotation of the stem 110 causes the spring extensions of the fixedly mounted spring loaded plate 104 to engage the wheel 106 and rotate to record a cycle count. A series of conventional linkages between the respective wheels cause each to advance on the appropriate count.

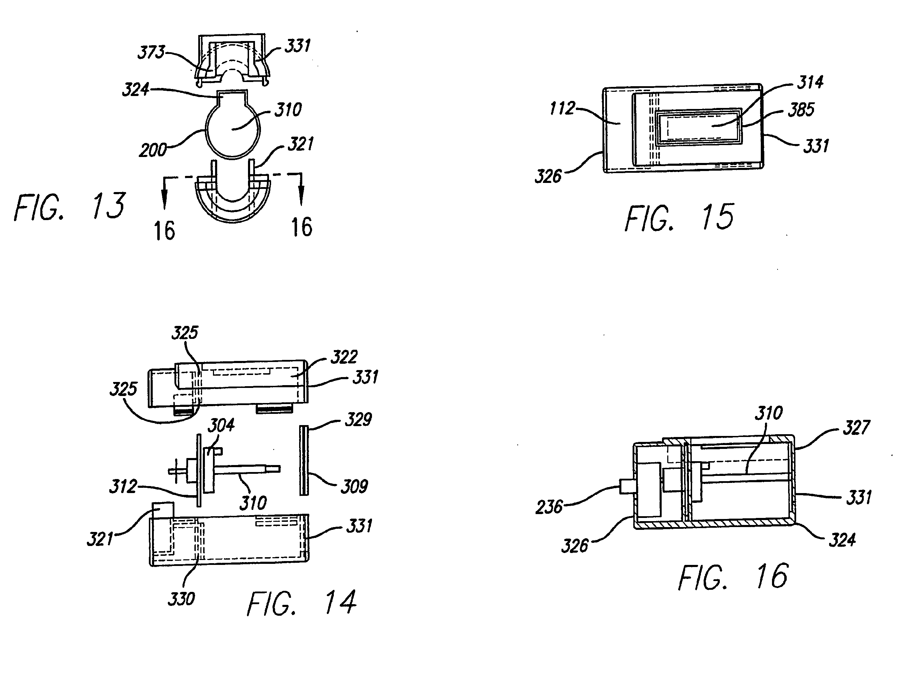

The housing 45 of the counter 35 has a two-part construction with front half 122 containing the window 85 and a back half 124 joined thereto. Each of the halves 122 and 124 have a first end 126 with a bore dimensioned to receive the plunger 36 and a second end 127 with an end wall 131 having a tongue 123 adapted to receive a groove 111 formed on the end cap 109. Central orifice 107 of end cap 109 receives the stem 110. The grooved rectangular extension 129 of the end cap 109 mates with the tongued rectangular cut-out of the end wall 131 of the window half 122. A cylindrical slot 125 (not shown, see FIG. 16 for corresponding part 322) formed in the inner periphery of both the window half 122 and back half 124 is dimensioned to receive end plate 112 with stem 110 passing through a central passageway. Legs 121 are spaced apart to receive flattened edges 163 of cam actuator 120.

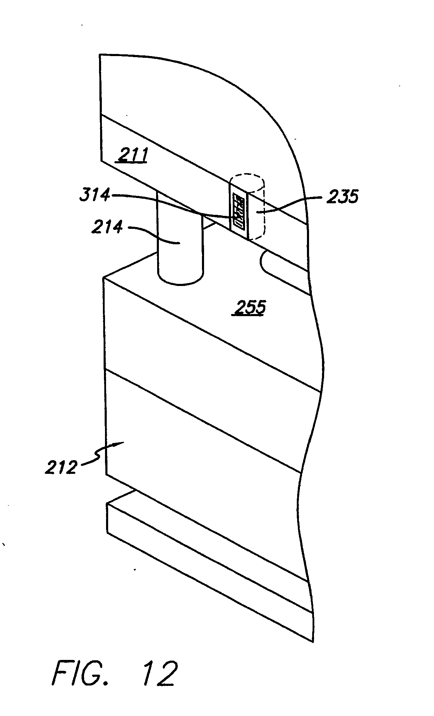

The internal structure of the protective housing 45 is the same as the structure illustrated in FIGS. 12-15 which shows the left handed or cavity version of the counter 235. The housing 245 of the cavity version 235 of the counter is merely a the housing flipped over with a oppositely oriented counter mechanism having a stem 310 extending from the left side of the counter mechanism 302 when the number wheels are oriented right side up. The numbering convention of the right handed embodiment shown in FIGS. 1-11 have been maintained with the reference numbers between 1-99 corresponding to numbers between 200-299 and the numbers between 100-199 corresponding to the numbers between 300-399. As shown in FIG. 12, the cavity half counter 235 is designed to be positioned in the stationary, upper half of the tool to be actuated by the movable, lower half; however, both the upper and lower tool halves could be movable towards each other. As shown in the embodiment of FIGS. 12-16, in order to view the numerical display in the proper orientation the display and plunger must be orientated as a mirror image of the cavity half embodiment of the counter shown in FIG. 1-11.

The housing 245 of the counter 235 has a two-part construction with front half 322 containing the window 385 and a back half 324 joined thereto. Each of the halves 322 and 324 have a first end 326 with a bore dimensioned to receive the plunger 236 and a second end 327 with an end wall 331 having a tongue 323 adapted to receive a groove 311 formed on the end cap 309. Central orifice 307 of end cap 309 receives the stem 310. The grooved rectangular extension 329 of the end cap 309 mates with the tongued rectangular cut-out of the end wall 331 of the window half 322. A cylindrical slot 325 formed in the inner periphery of both the window half 322 and back half 324 is dimensioned to receive end plate 312 with stem 310 passing through a central passageway. Legs 321 are spaced apart to receive flattened edges 363 of cam actuator 320.

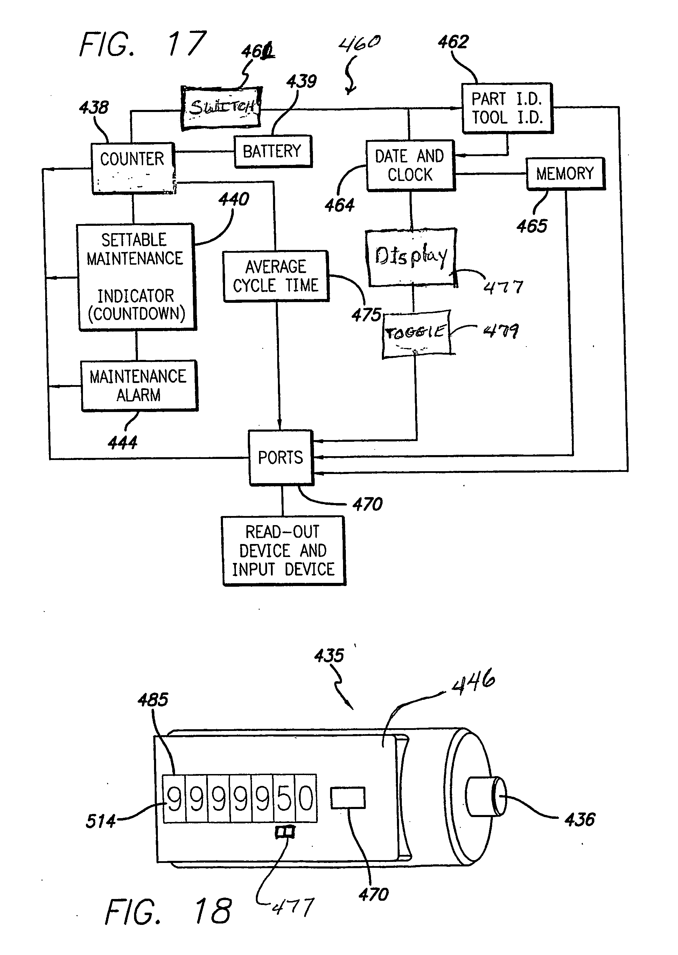

In another preferred embodiment of the invention, an electronic chip can be mounted in the housing 445. The housing 445 is shown in a core half embodiment in FIGS 17-18. However, it is to be understood that the chip may be mounted in either the cavity version 235 or core version 35 of the counter described above. The chip preferably includes a switch 461 that is actuated when the tool block 411 is raised, the plunger actuator 436 is lifted upwardly to abut the underside 457 of the top tool half 411. The lower surface 457 depresses the plunger actuator 436 to close a switch contact 461 (FIG. 17) to cause operation of the counter mechanism 502 for one cycle. In this embodiment of the invention, the counter display may be a mechanical numerical display as described above or may optionally be an LCD or LED display 477 (See FIG. 17). The use of a mechanical display being preferred in application where battery life is deemed critical by the tool maker since it does not need to draw power to display a cycle count.

The actuator 436 may be the mechanical actuator described above with reference to the prior embodiment or may also be a proximity switch (not shown). Where a proximity switch is used a ferromagnetic body would need to be installed across the parting line from the first end of the counter. When the tool portions are brought into contact, the attractive force of the ferromagnetic would overcome a biasing force on a movable armature within the switch and cause it to close indicating the completion of a tool cycle. As the tool portions move apart, the biasing force would again open the switch. Such proximity switch actuation of electrical cycle counters is well known in the art.

In the embodiment of the invention where an LCD or LED 477 display is utilized, the display 477 may be toggled between various settings to alternately display multiple counting functions that are being simultaneously tracked and stored in memory. For example, the total cycles in a tool life, cycle count down to a predetermined count for scheduled maintenance, part count for a production run, or summary count for multiple production runs may be simultaneously stored in the memory 465 of chip 460. A toggle switch 477 is provided on the exterior of the monitor which may be depressed to access information from memory 465 which is displayed sequentially in response to depressing the toggle switch 477. In this way, a default display such as count down to maintenance may be shown on display 477 until the tool operator depressed the toggle switch 477 to sequentially show other stored counts in the memory 465. The use of toggled display is advantageous since the use of multiple displays in a counter undesirably increases energy consumption which can shorten battery life and because the inclusion of multiple displays would require a larger counter and housing. As mentioned above, keeping the size of the counter to a minimum is important because space on the tool at the parting line is at a premium.

The chip 460 is preferably located adjacent to the end plate (not shown) of the counter 435. Of course, when the tool opens and lowers the top surface 455 of the lower tool half from the undersurface of the top tool half, the plunger 436 is urged by an internal spring to again project above the top wall 454 of the counter to be ready to be actuated upon the next closing cycle of the tool. The chip 460 has a memory device 465 which is programmed to stores the current cycle count.

It is preferred that the counter 435 have a number of other functions which are provided by the circuitry of the electronic chip 460. An input device 462 can be utilized to store a part identification number or part into the memory 465 so that each part being run on the tool may be specifically identified. Further, it is preferred that the chip 460 also include a settable date and time clock 464 by which the date and the time of day are kept. The date and clock device are particularly useful for retaining the history of operation of the tool in a memory 465. The memory 465 (shown in FIG. 17) is programmed to keep a log of the dates when the tool is in used and also may record the number of cycles to count to number of parts that have been made during each of those production runs. Particularly where the tool is used for just-in-time production, there may be a series of dates stored in memory and a total count of the number of parts made over the time periods when the tool was actually in the press and tooling parts. Whatever the particular arrangement, the date and clock may be used to provide in memory a history of the particular times of usage of the tool.

It is preferred that there be communication input and output ports 470, which can be connected to a readout device which preferably is a hand-held, readout device (not shown) that is commercially available. Such readout devices preferably is a suitably programmed personal digital assistance or similar hand held device having communication input and out components, whether wired or wireless, to send and receive data from the chip 460. Alternatively, the ports 470 could be connected or be connectable to a computer or computer system which could interrogate the counter for a complete readout, for specific information, or calculations that which has been stored in memory 465. The readout device is preferably also an input device which can input information into the memory 465 with respect to a particular preventive maintenance operation that have been performed or that are scheduled to be performed in the future so that the tool includes a maintenance history and/or maintenance schedule which may be accessed by the readout device.

In addition, it is preferred that the monitor, as shown in FIG. 17, have an average cycle time circuit or means 475 by which the cycle times are accumulated and then averaged; so that the average cycle time to make and eject a part can be displayed or read out, such as through the ports 470. Alternatively, a separate display may be provided on the counter face to show the average cycle time or display other data stored in memory 465. This may be accomplished by having a toggle switch on the face of the counter 435 that is programmed to display a variety of data when pressed in a predetermined sequence. For example, the memory 465 may be simultaneously storing a count down from a preset cycle count to a reading or zero indicating that scheduled maintenance is to be performed, the number or parts made in a particular production run, the sum total of parts made in different production runs of the same part, and the total number of tool cycles for the life of the tool. These counts may be serially displayed on alternate digital display (not shown) by depressing the toggle switch in a predetermined sequence. Further, the memory 465 can be programmed to simultaneously store multiple countdowns or deadlines for schedules maintenance.

Preferably, the monitor not only includes the counter 435, which accumulates the total number of cycles which have occurred, but also includes the maintenance switch means 442 which can be set to a specific number, and when the counter 435 reaches this specific number set in the maintenance switch means 442, the latter actuates the alarm or indicator 444 to indicate to the press operator that the tool needs to receive preventive maintenance. The maintenance switch means 442 and alarm indicator can be reset either by use of a reset bottom (not shown) on the exterior to the housing 445 or by use of the input device.

By way of example only, data displayed on the readout device from the counter 435 on the tool may be, as follows:

| **Identification** | |
|---|---|
| Part Name: | Bezel |
| Part I.D. #: | 5639-4 |
| Tool I.D. #: | 322 |
| Number of Tool Cavities: | 8 |
| Manufacturer: | XYZ Corp. |
| | |

| **History:** | |
|---|---|
| Date: | 12/4/03 - 3/4/03 |
| Number of cycles: | 345,604 |
| Average production cycle: | 10.0 seconds |
| Date: | 3/16/03 - 6/1/03 |
| Number of cycles: | 330,488 |
| Average production cycle: | 11.5 seconds |
| Resin Run | ABC Corp. PVC X-127 |
| | |

| **Maintenance Schedule:** | **Cycles** |
|---|---|
| Total Cycles Life of Tool: | 750,000 |
| Cycles Since Last Routine Lubrication | 10,000 |
| Next Schedule Routine Lubrication | 40,000 |
| Cycles Since Last Wear Parts Maintenance: | 50,000 |
| Next Scheduled Wear Parts Maintenance: | 800,000 |
| Cycles Since Last Total Overhaul | 250,000 |
| Next Scheduled Total Overhaul: | 1,000,00 |
| | |

| **Preferred Replacement Parts:** | |
|---|---|
| Ejector Pins | XYZ Corp #34526-2 |
| Bushings | XYZ Corp #356596-3s |
| Core Pins | XYZ Corp #398290-A |

Another preferred aspect of the invention includes improved methods of installing the cylindrical tool cycle counters disclosed herein. In one preferred method of installing the substantially cylindrical counter, the counter is mounted in a plate 130 defining a portion of the parting line between the mold portions 11 and 12. Although the method is described herein with reference to installation in the core half of the tool, it should be understood that these preferred methods are equally applicable to installation of cavity version of the counter in the cavity half of the tool. As best seen in FIGS. 19 and 20, plate 130 has a top surface or a parting line surface 55 and an opposite surface 134 as well as a front exterior surface 53. The distance between the parting line surface 55 and the opposite surface 134 is defined as the height "P" of the plate side wall as shown in FIG. 19. In this preferred method, the height "C" of the counter, which is defined as the distance between the first end 126 and second end 131, as illustrated in FIG. 5, is selected to be slightly less than the height P of plate 130. It is particularly advantages for the substantially cylindrical bore 51 to be formed in plate 130 from opposite surface 134 and extending upwardly toward the parting line surface 55, but to not reach it. This is so because the plate 130 may be machined at the same time and using the same "set up" as for machining the guide pins 14 and bushings 15 of the tool. With past counters which were typically installed in rectangular pockets formed in the mold, the tool would need a separate "set up" step to properly orient it for machining the pocket. This process is more costly and cumbersome than desirable.

After the counter 35 is installed within plate 130, it is preferably held in place when the next plate 138 forming the tool is mounted to the core half 26 of the tool portion. Where the tool is made from a single plate or other plates are spaced apart from it, other bore blocking structures may be installed to secure the counter, such a rail or ledge. If it is desirable to leave the lower portion of the bore open, a thread opening (not shown) can be machined into the sidewall of the cylindrical bore 51 and set screw can be installed to hold the counter in place.

Where a mechanical actuator is being used such as in the counter 35 shown in FIGS. 19 & 20, a smaller circular aperature 115 is also formed from opposite surface 134 and is dimensioned to receive the actuator 36 of counter 35. However, if the counter includes a proximity switch, the circular aperature may not be necessary, or in some cases where a less sensitive switch is used, may need to be enlarged to allow more intimate contact between the armature and ferromagnet. When forming the substantially cylindrical bore 51, care should be taken that the bore diameter B, as best shown in FIG. 20, is slightly larger than the counter diameter D, as best seen in FIG. 4. In the embodiment shown in FIGS. 19 and 20, a side opening 117, is formed in the sidewall 53 of tool block 26 which is substantially rectangular in shape and is dimensioned to receive the block extension 46 of counter 35. Preferably, the side opening or aperature 117 is formed by walking a cutting tool to the outside of the plate 130 and engaging surface 53 of plate 130 with the cutting tool. Preferably the aperature 117 formed in the exterior side wall 53 is dimensioned to snugly receive the block portion 46 of the counter 35. In this way, the interior walls 140 defining the aperature 117 can engage the block portion 46 to prevent rotation about the counter's longitudinal axis during operation of the tool in a press. In order to allow a tool maker maximum flexibility, it is desirable that the cylindrical counter of the present invention be manufactured in a variety of counter heights which approximately match commonly used plates heights that define a portion of the parting line of the tool. The manufacture of counters approximately matching the predetermined heights of the most common plate sidewalls can greatly facilitate installation of the counters.

In an installation where the height of the plates defining the parting line are of a non-standard height (not shown), an actuator rod which functions to extend the length of the actuator may be attached. Under these circumstances, the actuator includes a threaded end which is dimensioned to engage a threaded bore formed on the end of the rod. It has been found that providing threaded actuators and actuating rods provides a more stable connection to a counter than had been previously possible with actuators joined by dowel pins and the like. This actuator extension technique may also be used when it is necessary to place the counter away from the parting line in a plate that is at least one plate removed from the parting line. In such an installation, the circular aperature (not shown) is extended through one or more plates to reach the parting line. An appropriate length actuator rod is chosen so that it may extend above the parting line and be actuated by contact from the opposing tool portion.

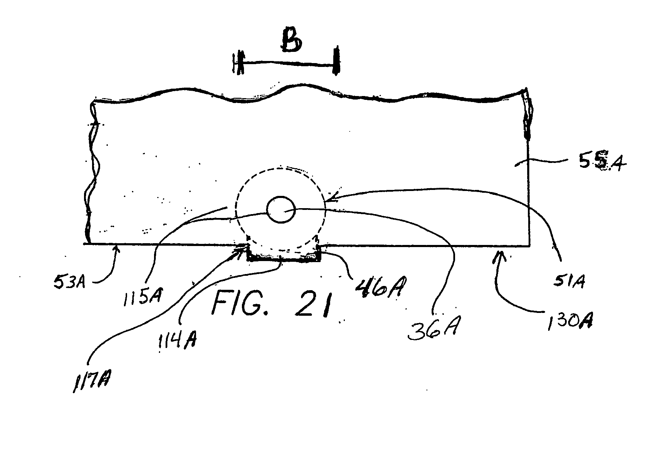

While it is preferred that the block extension 46 is flush with the exterior surface 53 of the tool portion, it is to be understood that, in an alternate method of installation described below, the surface of block extension 46A extends past the side 53A of the exterior of the tool portion. (See FIG. 21). In this method, the diameter D of cylindrical portion of the tool cycle counter (see FIG. 4) is determined. Next, the dimensions of the block extension 46A of the display portion 114A of the counter are determined and a tool is selected for forming a bore 51A diameter substantially equal to or slightly larger than dimension D, locating the boring tool above the tool portion to receive the counter 35A at a position calculated to form an opening 117A in the front exterior side 53A of the tool portion of sufficient dimensions to accommodate the block extension 46A to the extent that display 114A is visible through the side opening 117A in the side of the tool 53A.

In accordance with this preferred arrangement, the present invention further includes a method of installing a substantially cylindrical cycle counter within a tool including the steps of measuring the depth DP (FIG. 4) of the block extension 46 of the mould counter 35, measuring a distance from an exterior surface of a tool portion that is substantially equal to DP, measuring the diameter D of the substantially cylindrical portion of the tool cycle counter 35; selecting a substantially cylindrical boring tool having a diameter equal to or greater diameter D, locating, at the parting line, the boring tool a distance T from the side 53 of the block 26, and boring a substantially cylindrical aperture in the tool block 26 having a circular aperture 115 and side opening 119, placing the substantially cylindrical tool cycle counter 35 within the substantially cylindrical bore in an orientation in which the display 114 is substantially flush with the exterior side 53 of the block 26. In some case, depending on the relative dimensions of D to DP, it may be necessary to machine the side opening 117 to accommodate the block extension 46. In this way, the end user can ensure that display 114 may be viewed through the opening 117. The cylindrical counter 35 is preferably retained within the cylindrical bore by a snug friction fit and may also be adhered to the block 26 by use of a suitable adhesive. In an another alternate embodiment, the counter 35 can be mounted to the block 26 by screws (not shown) extending through aligned inter-mediate bosses (not shown) and into tapped holes (not shown) formed on the tool.

## Claims

1. A tool cycle counter for installation within a production tool (10) having moving halves (11, 12; 211, 212) which are moved from an open position into a closed position in order to produce a formed article, the movement of the tool from the open position to the closed position constituting a cycle, said tool cycle counter comprising:
a numerical display (114, 114A, 477) to indicate a cycle count;
an actuator (36, 120, 320, 436) operably associated with the counter assembly and being actuated by completion of a production cycle;
a counter assembly (38, 106) for recording a cycle count in response to actuation of the actuator, the counter assembly being operably associated with the numerical display,
**characterized by**
a substantially cylindrical outer housing (45) encasing the counter assembly,
wherein the substantially cylindrical outer housing (45) includes a first end (126), a second end (131), and a side wall extending between the first end (126) and the second end (131) and having a curved portion.

2. A tool cycle counter in accordance with Claim 1 wherein the curved portion of the side wall has a projection extending outwardly therefrom, the projection being dimensioned to engage at least one portion of the tool (10) to prevent rotation of the counter about the longitudinal axis of the cycle counter when the counter is mounted in the tool.

3. The tool cycle counter of Claim 2 wherein the projection includes a pair of parallel walls projecting outwardly from the curved portion of the side wall of the outer housing (45), and a substantially planar side wall extending between the pair of parallel walls.

4. The tool cycle counter of Claim 3 wherein a counter display window (85, 385) is located on the substantially planar portion of the projection, the projection and display being dimensioned to project into an aperture formed in an exterior wall of the tool such that the display is visible from the exterior of the tool (10).

5. The tool cycle counter of Claim 1 wherein the distance between the first end (126) and second end (131) defines the height of the sidewall, the height of the sidewall being selected to approximately match the predetermined height of a tool plate making up a portion of one of the tool halves (11, 12; 211, 212) and defining at least a portion of a tool parting line which constitutes the boundary between the tool halves.

6. The tool cycle counter of Claim 5 wherein the height of the sidewall is selected to be a predetermined distance less than the height of the tool plate, the actuator is located at the first end (126) of the counter and extends outwardly from the first end of the housing a distance greater than the predetermined distance such that, when the tool cycle counter is mounted in the tool plate, the actuator extends through an aperture formed in the tool plate above the parting line of the tool (10).

7. The tool cycle counter of Claim 5 wherein the height of the sidewall is a predetermined distance less than that of the tool plate, the actuator is located at the first end of the counter and extends outwardly from the first end of the housing a distance less than the predetermined distance, the actuator having a threaded surface for connection to an oppositely threaded rod of a predetermined length which in combination with the height of the sidewall is longer than the predetermined distance such that the rod extends through a bore formed in the plate above the parting line of the tool (10).

8. The tool cycle counter of Claim 1 wherein the actuator includes a proximity switch mounted entirely within the substantially cylindrical outer housing (45) of the cycle counter and wherein the actuator is electrically connected to the numerical display (114, 114A, 477).

9. The tool cycle counter of Claim 1 wherein the actuator includes a mechanical plunger that extends through the substantially cylindrical outer housing (45) of the cycle counter, a mechanical display operably connected with the plunger which displays a cycle count without drawing electrical power, an electrical memory device operably linked to the actuator for electronically storing at least a tool cycle count, and an output port for transferring the stored information to an external device.

10. A method of installing a substantially cylindrical tool cycle counter in accordance with anyone of the claims 1-9, the counter having a predetermined diameter in a tool having at least one movable tool portion for use within a tool press comprising the steps of:
forming a substantially cylindrical bore in a tool portion having a diameter greater than the predetermined diameter of the substantially
cylindrical tool cycle counter; and mounting the substantially cylindrical cycle counter within the substantially cylindrical bore formed in the tool portion, wherein the substantially cylindrical tool cycle counter comprises an outer housing which includes a first end, a second end, and a side wall extending between the first end and the second end and having a curved portion.

11. The method of Claim 10 wherein the substantially cylindrical cycle counter has a cycle count display and wherein a first tool portion and second tool portions meet at a parting line, the tool having an exterior surface that is viewable from the exterior of the tool and further including the step of: measuring a distance from an exterior surface of one of the first tool portion and second tool portion that is less than the predetermined diameter of the substantially cylindrical cycle counter; forming a substantially cylindrical bore from the side of the tool opposite the parting line in the tool portion, the bore having a diameter greater than the predetermined diameter of the substantially cylindrical cycle counter; forming an aperture in the exterior surface of the tool portion which is in communication with the substantially cylindrical bore and; mounting the substantially cylindrical tool cycle counter within the substantially cylindrical bore in an orientation in which the cycle count display may be viewed through the aperture formed in the exterior surface of the tool portion.

12. The method of Claim 10 wherein a first tool portion and second tool portion meet at a parting line, include a plate having a parting line surface defining at least a portion of the parting line and an opposite surface located opposite the parting line surface, and further including the steps of: determining the height of the plate which is defined as the distance between the parting line surface and the opposite surface; determining the counter height which is defined as the distance between a first end of the counter and a second end of the counter and; selecting a counter with a counter height slightly less than the plate height.

13. The method of Claim 12 wherein the substantially cylindrical bore is formed from the opposite surface of the plate and extends toward the parting line surface a distance approximately equal to the counter height and the step of mounting the substantially cylindrical tool cycle counter further including the additional step of: forming an aperture that extends from the substantially cylindrical bore to the parting line surface of the tool, the aperture being dimensional to receive an actuator located on the first end of the counter; and inserting the actuator of the counter through the aperture so that at least a portion of the actuator extends above the parting line surface.

14. The method of Claim 12 wherein the step of mounting the substantially cylindrical counter includes the step of placing the cylindrical counter within the substantially cylindrical bore with the first end oriented toward the parting line surface and second end toward the opposite surface of the tool, and securing the counter within the tool by installing a bore closing structure across the opening of the substantially cylindrical bore.

## Patentansprüche

1. Gerätezyklenzähler für die Installation in einem Fertigungswerkzeug (10) mit beweglichen Hälften (11, 12; 211, 212), die aus einer offenen Position in eine geschlossene Position bewegt werden, um einen geformten Gegenstand zu produzieren, wobei die Bewegung des Werkzeugs von der offenen in die geschlossene Position dabei einen Zyklus bildet, besagter Gerätezyklenzähler umfassend: eine Ziffernanzeige (114, 114A, 477) zum Anzeigen eines Zyklenzählstands; einen Auslöser (36, 120, 320, 436), der in operativer Weise mit der Zählereinheit verbunden ist und durch die Beendigung eines Produktionszyklus ausgelöst wird; eine Zählereinheit (38, 106) für das Aufzeichnen eines Zyklenzählstands in Erwiderung auf das Betätigung des Auslösers, wobei die Zählereinheit operabel verbunden ist mit der Ziffernanzeige, **gekennzeichnet durch** ein die Zählereinheit einschließendes im Wesentlichen zylindrisches Außengehäuse (45), wobei das im Wesentlichen zylindrische Außengehäuse (45) ein erstes Ende (126), ein zweites Ende (131) und eine sich zwischen dem ersten Ende (126) und dem zweiten Ende (131) erstreckende Seitenwand mit einem gekrümmten Teilbereich umfasst.

2. Gerätezyklenzähler nach Anspruch 1, **dadurch gekennzeichnet, dass** der gekrümmte Teilbereich der Seitenwand einen sich von dort nach außen erstreckenden Überstand aufweist und der Überstand so bemessen ist, zumindest in einen Teil des Fertigungswerkzeugs einzugreifen, um eine Rotation des Zählers um die Längsachse des Zyklenzählers zu verhindern, wenn der Zähler im Fertigungswerkzeug angebracht ist.

3. Gerätezyklenzähler nach Anspruch 2, **dadurch gekennzeichnet, dass** der Überstand ein Paar parallele Wände umfasst, die von dem gekrümmten Teilbereich der Seitenwand des Außengehäuses (45) nach außen ragen und eine im Wesentlichen ebenflächige Seitenwand, die sich zwischen dem Paar paralleler Wände erstreckt.

4. Gerätezyklenzähler nach Anspruch 3, **dadurch gekennzeichnet, dass** ein Anzeigefenster (85, 385) in dem im Wesentlichen ebenflächigen Teilbereich des Überstandes positioniert ist und der Überstand und die Anzeige bemessen sind, um in eine in der Außenwand des Fertigungswerkzeugs erstellte Öffnung zu ragen, so dass die Anzeige von außerhalb des Fertigungswerkzeugs (10) sichtbar ist.

5. Gerätezyklenzähler nach Anspruch 1, **dadurch gekennzeichnet, dass** die Distanz zwischen dem ersten Ende (126) und dem zweiten Ende (131) die Höhe der Seitenwand definiert, die Höhe der Seitenwand so gewählt ist, dass sie annähernd mit der vorgegebenen Höhe einer Werkzeugplatte, die einen Teil einer der Werkzeughälften (11, 12; 211, 212) bildet, übereinstimmt und zumindest einen Teil der Werkzeugteilungslinie definiert, welche die Grenze zwischen den zwei Werkzeughälften darstellt.

6. Gerätezyklenzähler nach Anspruch 5, **dadurch gekennzeichnet, dass** die Höhe der Seitenwand gewählt wird, um eine vorbestimmte Distanz zu bilden, die geringer ist als die Höhe der Werkzeugplatte, der Auslöser am ersten Ende (126) des Zählers positioniert ist und sich von dem ersten Ende des Gehäuses um eine größere als die vorbestimmte Distanz nach außen erstreckt, so dass sich der Auslöser, wenn der Gerätezyklenzähler in die Werkzeugplatte eingebaut wird, durch eine in der Werkzeugplatte eingebrachte Öffnung über die Teilungslinie des Fertigungswerkzeugs (10) hinaus erstreckt.

7. Gerätezyklenzähler nach Anspruch 5, **dadurch gekennzeichnet, dass** die Höhe der Seitenwand eine vorbestimmte Distanz kleiner als die der Werkzeugplatte ist, der Auslöser am ersten Ende des Zählers positioniert ist und sich von dem ersten Ende des Gehäuses um eine kleinere als die vorbestimmte Distanz nach außen erstreckt, der Auslöser eine gewundene Oberfläche für die Verbindung mit einem gegenüberliegenden Stab mit einer vorbestimmten Länge aufweist, die in Kombination mit der Höhe der Seitenwand länger als die vorbestimmte Distanz ist, so dass sich der Stab durch eine oberhalb der Teilungslinie des Fertigungswerkzeugs (10) in der Platte befindlichen Bohrung erstreckt.

8. Gerätezyklenzähler nach Anspruch 1, **dadurch gekennzeichnet, dass** der Auslöser einen Näherungsschalter umfasst, der gänzlich innerhalb des im Wesentlichen zylindrischen Außengehäuses (45) des Zyklenzählers angebracht ist und dass der Auslöser elektrisch mit der Ziffernanzeige (114, 114A, 477) verbunden ist.

9. Gerätezyklenzähler nach Anspruch 1, **dadurch gekennzeichnet, dass** der Auslöser einen mechanischen Kolben umfasst, der sich durch das im Wesentlichen zylindrische Außengehäuse (45) des Zyklenzählers erstreckt, eine mechanische Anzeige mit dem Kolben verbunden ist, welche einen Zyklenzählstand anzeigt, ohne elektrische Leistung zu verbrauchen, eine elektrische Speichereinheit, welche operativ mit dem Auslöser verbunden ist, um zumindest einen Gerätezyklenzählstand elektronisch zu speichern und einen Ausgabeport, um die gespeicherten Informationen an eine externe Einheit zu übermitteln.

10. Verfahren zum Installieren eines im Wesentlichen zylindrischen Gerätezyklenzählers gemäß eines der Ansprüche 1 bis 9 mit einem vorbestimmten Durchmesser in einem Werkzeug mit mindestens einem beweglichen Werkzeugteil zur Verwendung innerhalb eines Presswerkzeugs, folgende Schritte umfassend: Ausbilden einer im Wesentlichen zylindrischen Bohrung in einem Werkzeugteil, die einen Durchmesser aufweist, der größer als der vorbestimmte Durchmesser des im Wesentlichen zylindrischen Geräteszyklenzählers ist; und Anbringen des im Wesentlichen zylindrischen Zyklenzählers innerhalb der in dem Werkzeugteil gebildeten im Wesentlichen zylindrischen Bohrung, wobei der im Wesentlichen zylindrische Gerätezyklenzähler ein Außengehäuse umfasst, welches ein erstes Ende, ein zweites Ende und eine sich zwischen dem ersten Ende und dem zweiten Ende erstreckende Seitenwand mit einem gekrümmten Teilbereich umfasst.

11. Verfahren nach Anspruch 10, **dadurch gekennzeichnet, dass** der im Wesentlichen zylindrische Zyklenzähler eine Zyklenzählanzeige umfasst und ein erster Werkzeugteil und ein zweiter Werkzeugteil sich an einer Teilungslinie treffen, das Werkzeug eine äußere Oberfläche aufweist, die von außerhalb des Werkzeugs sichtbar ist und des Weiteren folgende Schritte beinhaltend: Messung einer Distanz zwischen einer äußeren Oberfläche des ersten Werkzeugteils oder des zweiten Werkzeugteils, die geringer ist als der vorbestimmte Durchmesser des im Wesentlichen zylindrischen Zyklenzählers; Ausbilden einer im Wesentlichen zylindrischen Bohrung von der Seite des Werkzeugs her, die der Teilungslinie im Werkzeugteil gegenüber liegt, wobei die Bohrung einen Durchmesser aufweist, der größer als der vorbestimmte Durchmesser des im Wesentlichen zylindrischen Zyklenzählers ist; Ausbilden einer Öffnung in der äußeren Oberfläche des Werkzeugteils, die in Verbindung mit der im Wesentlichen zylindrischen Bohrung steht und Anbringen des im Wesentlichen zylindrischen Zyklenzählers innerhalb der im Wesentlichen zylindrischen Bohrung in einer Ausrichtung, in welcher die Zyklenzählanzeige durch die in der äußeren Oberfläche des Werkzeugsteils ausgeformte Öffnung betrachtet werden kann.

12. Verfahren nach Anspruch 10, **dadurch gekennzeichnet, dass** sich ein erster Werkzeugteil und eine zweiter Werkzeugteil an einer Teilungslinie treffen und eine Platte mit einer Teilungslinienfläche enthalten, welche mindestens einen Teil der Teilungslinie definiert sowie eine Gegenfläche, die gegenüber der Teilungslinienfläche positioniert ist und des Weiteren folgende Schritte beinhaltet: Ermitteln der Höhe der Platte, welche als die Distanz zwischen der Teilungslinienfläche und der Gegenfläche definiert ist; Festlegen der Zählerhöhe, welche als die Distanz zwischen einem ersten Ende des Zählers und einem zweiten Ende des Zählers definiert ist und Auswahl eines Zählers mit einer etwas geringeren Zählerhöhe als die Plattenhöhe.

13. Verfahren nach Anspruch 12, **dadurch gekennzeichnet, dass** die im Wesentlichen zylindrische Bohrung von der Gegenfläche der Platte her eingebracht wird und sich in Richtung der Teilungslinienfläche in etwa um eine Distanz gleich der Zählerhöhe erstreckt und der Schritt des Anbringens des im Wesentlichen zylindrischen Gerätezyklenzählers des Weiteren die folgenden zusätzlichen Schritte beinhaltet: Ausbilden einer Öffnung, die sich von der im Wesentlichen zylindrischen Bohrung zur Teilungslinienfläche des Werkzeugs erstreckt, wobei die Öffnung dimensioniert ist, um einen auf dem ersten Ende des Zählers positionierten Auslöser aufzunehmen sowie Einbringen des Auslösers des Zählers durch die Öffnung, so dass zumindest ein Teil des Auslösers über die Teilungslinienfläche hinausragt.

14. Verfahren nach Anspruch 12, **dadurch gekennzeichnet, dass** der Schritt des Anbringens des im Wesentlichen zylindrischen Zählers den Schritt des Platzierens des zylindrischen Zählers innerhalb der im Wesentlichen zylindrischen Bohrung mit dem ersten Ende ausgerichtet zur Teilungslinienfläche und dem zweiten Ende ausgerichtet zur Gegenfläche des Werkzeugs beinhaltet sowie die Sicherung des Zählers innerhalb des Werkzeugs durch Installation eines Bohrungsverschlusses über der Öffnung der im Wesentlichen zylindrischen Bohrung.

## Revendications

1. Compteur de cycles d'outil pour installation dans un outil de production (10) ayant des moitiés mobiles (11, 12 ; 211, 212) qui sont déplacées d'une position ouverte à une position fermée afin de produire un article façonné, le mouvement de l'outil de la position ouverte à la position fermée constituant un cycle, ledit compteur de cycles comprenant :
un affichage numérique (114, 114A, 477) pour indiquer un comptage de cycles ;
un actionneur (36, 120, 320, 436) associé en service à l'ensemble de compteur et actionné par l'achèvement d'un cycle de production ;
un assemblage de compteur (38, 106) pour enregistrer un comptage de cycles en réponse à l'actionnement de l'actionneur, l'ensemble de compteur étant associé en service à l'affichage numérique, **caractérisé par**
un boîtier externe (45) sensiblement cylindrique enserrant l'ensemble de compteur,
dans lequel le boîtier externe (45) sensiblement cylindrique comprend une première extrémité (126), une seconde extrémité (131) et une paroi latérale s'étendant entre la première extrémité (126) et la seconde extrémité (131) et ayant une portion incurvée.

2. Compteur de cycles d'outil selon la revendication 1, dans lequel la portion incurvée de la paroi latérale présente une saillie qui s'en étend vers l'extérieur, la saillie étant dimensionnée pour s'engager sur au moins une portion de l'outil (10) afin d'empêcher la rotation du compteur autour de l'axe longitudinal du compteur de cycles lorsque le compteur est monté dans l'outil.

3. Compteur de cycles d'outil selon la revendication 2, dans lequel la saillie comprend une paire de parois parallèles saillant vers l'extérieur depuis la portion incurvée de la paroi latérale du boîtier externe (45) et une paroi latérale sensiblement plane s'étendant entre les deux parois parallèles.

4. Compteur de cycles d'outil selon la revendication 3, dans lequel une fenêtre d'affichage (85, 385) pour le compteur est disposée sur la portion sensiblement plane de la saillie, la saillie et l'affichage étant dimensionnés pour faire saillie dans une ouverture formée dans une paroi externe de l'outil de sorte que l'affichage soit visible de l'extérieur de l'outil (10).

5. Compteur de cycles d'outil selon la revendication 1, dans lequel la distance entre la première extrémité (126) et la seconde extrémité (131) définit la hauteur de la paroi latérale, la hauteur de la paroi latérale étant choisie pour s'accorder approximativement avec la hauteur prédéterminée d'un plaque d'outil constituant une portion de l'une des moitiés d'outil (11, 12 ; 211, 212) et définissant au moins une portion d'une ligne de partage de l'outil qui constitue la limite entre les moitiés d'outil.

6. Compteur de cycles d'outil selon la revendication 5, dans lequel la hauteur de la paroi latérale est choisie pour être d'une distance prédéterminée inférieure à la hauteur de la plaque d'outil, l'actionneur est situé à la première extrémité (126) du compteur et s'étend vers l'extérieur depuis la première extrémité du boîtier d'une distance supérieure à la distance prédéterminée de sorte que, lorsque le compteur de cycles d'outil est monté sur la plaque d'outil, l'actionneur s'étend à travers une ouverture formée dans la plaque d'outil au-dessus de la ligne de partage de l'outil (10).

7. Compteur de cycles d'outil selon la revendication 5, dans lequel la hauteur de la paroi latérale est d'une distance prédéterminée inférieure à celle de la plaque d'outil, l'actionneur est situé à la première extrémité du compteur et s'étend vers l'extérieur depuis la première extrémité du boîtier d'une distance inférieure à la distance prédéterminée, l'actionneur ayant une surface filetée pour se raccorder à une tige de filet opposé d'une longueur prédéterminée qui, en combinaison avec la hauteur de la paroi latérale, est plus longue que la distance prédéterminée de sorte que la tige s'étende à travers un perçage formé dans la plaque au-dessus de la ligne de partage de l'outil (10).

8. Compteur de cycles d'outil selon la revendication 1, dans lequel l'actionneur comprend un commutateur de proximité monté entièrement dans le boîtier externe (45) sensiblement cylindrique et dans lequel l'actionneur est connecté électriquement à l'affichage numérique (114, 114A, 477).

9. Compteur de cycles d'outil selon la revendication 1, dans lequel l'actionneur comprend un plongeur mécanique qui s'étend à travers le boîtier externe (45) sensiblement cylindrique du compteur de cycles, un affichage mécanique connecté en service avec le plongeur, qui affiche un comptage de cycles sans prélever d'énergie électrique, un dispositif à mémoire électrique lié en service à l'actionneur pour stocker par voie électronique ay moins un comptage de cycles d'outil à un dispositif externe.

10. Procédé d'installation d'un compteur de cycles d'outil sensiblement cylindrique selon l'une quelconque des revendications 1 à 9, le compteur ayant au moins une portion d'outil mobile pour usage dans une presse d'outil comprenant les étapes consistant à former un perçage sensiblement cylindrique dans une portion d'outil ayant un diamètre supérieur au diamètre prédéterminé du compteur de cycles d'outil sensiblement cylindrique ; et à monter le compteur de cycles d'outil sensiblement cylindrique dans le perçage sensiblement cylindrique formé dans la portion d'outil, dans lequel le compteur de cycles d'outil sensiblement cylindrique comprend un boîtier externe qui comprend une première extrémité, une seconde extrémité et une paroi latérale s'étendant entre la première extrémité et la seconde extrémité et ayant une portion incurvée.

11. Procédé selon la revendication 10, dans lequel le compteur de cycles d'outil sensiblement cylindrique a un affichage de comptage de cycles et dans lequel une première portion d'outil et une seconde portion d'outil se rencontrent sur une ligne de partage, l'outil ayant une surface externe qui peut être observée de l'extérieur de l'outil et comprenant en outre les étapes consistant à mesurer une distance depuis une surface externe de l'une de la première portion d'outil et de la seconde portion d'outil qui est inférieure au diamètre prédéterminé du compteur de cycles sensiblement cylindrique ; à former un perçage sensiblement cylindrique depuis le côté de l'outil opposé à la ligne de partage dans la portion d'outil, le perçage ayant un diamètre supérieur au diamètre prédéterminé du compteur de cycles sensiblement cylindrique ; à former une ouverture dans la surface externe de la portion d'outil qui est en communication avec le perçage sensiblement cylindrique ; et à monter le compteur de cycles d'outil sensiblement cylindrique dans le perçage sensiblement cylindrique dans une orientation dans laquelle l'affichage de comptage de cycles peut être observé à travers l'ouverture formée dans la surface externe de la portion d'outil.

12. Procédé selon la revendication 10, dans lequel une première portion d'outil et une seconde portion d'outil se rencontrent sur une ligne de partage, comprennent une plaque ayant une surface de ligne de partage définissant au moins une portion de la ligne de partage et une surface opposée située à l'opposé de la surface de ligne de partage, et comprenant en outre les étapes consistant à déterminer la hauteur de la plaque qui est définie comme la distance entre la surface de ligne de partage et la surface opposée ; à déterminer la hauteur du compteur qui est définie comme la distance entre une première extrémité du compteur et une seconde extrémité du compteur; et à choisir un compteur avec une hauteur légèrement inférieure à la hauteur de la plaque.

13. Procédé selon la revendication 12, dans lequel le perçage sensiblement cylindrique est formé à partir de la surface opposée de la plaque et s'étend vers la surface de ligne de partage sur une distance approximativement égale à la hauteur du compteur et l'étape de montage du compteur de cycles d'outil sensiblement cylindrique comprenant en outre les étapes supplémentaires consistant du perçage sensiblement cylindrique à la surface de ligne de partage de l'outil, l'ouverture étant dimensionnée pour recevoir un actionneur situé sur la première extrémité du compteur ; et à insérer l'actionneur du compteur à travers l'ouverture de sorte qu'au moins une portion de l'actionneur s'étende au-dessus de la surface de ligne de partage.

14. Procédé selon la revendication 12, dans lequel l'étape de montage du compteur sensiblement cylindrique comprend l'étape de placement du compteur cylindrique dans le perçage sensiblement cylindrique avec la première extrémité orientée vers la surface de ligne de partage et la seconde extrémité vers la surface opposée de l'outil en installant une structure de fermeture du perçage en travers de l'ouverture du perçage sensiblement cylindrique.
